# EUROPEAN PATENT SPECIFICATION

(11) **EP 4 359 476 B1**
(45) Date of publication and mention of the grant of the patent: **06.08.2025**
(21) Application number: 22735141.8
(22) Date of filing: 16.06.2022
(51) Int. Cl.: C08L 23/06

(54) **POLYETHYLENE COMPOSITION HAVING IMPROVED MELT STRENGTH AND FLEXIBILITY**
POLYETHYLENZUSAMMENSETZUNG MIT VERBESSERTER SCHMELZEFESTIGKEIT UND FLEXIBILITÄT
COMPOSITION DE POLYÉTHYLÈNE AYANT UNE RÉSISTANCE À L'ÉTAT FONDU ET UNE FLEXIBILITÉ AMÉLIORÉES

(30) Priority: 22.06.2021 EP 21181011
(43) Date of publication of application: 01.05.2024
(73) Proprietor: SABIC Global Technologies B.V., 4612 PX Bergen op Zoom (NL)
(72) Inventor: OUDDANE, Mohamed, 6160 GA Geleen (NL)
(74) Representative: Sabic Intellectual Property Group
(86) International application number: PCT/EP2022/066526
(87) International publication number: WO 2022/268654

(56) References cited:
- EP-A1- 1 655 336
- EP-A1- 2 860 200
- EP-A1- 2 894 195
- EP-A1- 3 091 057

## Description

### FIELD OF INVENTION

The invention relates to the field of polyethylene compositions and to a process for preparing such polyethylene compositions. The invention further relates to articles comprising such polyethylene compositions and to a process for preparing such articles. In addition, the invention further relates to the use of articles comprising such polyethylene compositions.

### BACKGROUND

Ethylene based polymers are used extensively in various applications ranging from films to packaging materials to storage containers. Depending on its density and molecular structure (degree of branching), ethylene polymers such as Low Density Polyethylene (LDPE) and High Density Polyethylene (HDPE) can be used for various industrial applications. Often industry practitioners and manufactures desire polyethylene compositions, which have certain attributes. For example, while manufacturing containers using a blow molding process, especially for manufacturing large volume capacity containers (≥1.5 Litre), it is desired by manufacturers to use polyethylene compositions, which have high melt strength, so that sagging of the parison is controlled in order to minimize the defects in the final product. Similarly, during the manufacturing of blown films, it is desired by industry practitioners to use polyethylene polymers that have high melt strength in order to impart excellent bubble stability during film production.

For certain other applications it is also desired to have polyethylene compositions, which have low stiffness in order to impart flexibility to a product. For example, flexibility is particularly important, for preparing certain types containers (e.g. bottles and pouches), which can be used by a consumer to conveniently carry, a beverage or a food item (for example), and thereafter be crushed and disposed off for recycling. On the other hand, it has been often observed that any excess lowering of stiffness of a polyethylene material, reduces stackability of a container prepared from such a material, which in turn adversely affects the ease of storage and transportation of such containers. Moreover, a constant requirement for manufacturers has been to ensure that polyethylene polymers have excellent balance of stiffness and impact property, in order to ensure that the mechanical integrity of articles prepared from such polymers is retained. Existing grades of polyethylene compositions have been described in several published scientific articles and patents. For example, the published patent US 20160137822 A1, describes a composition having a first ethylene based polymer with a melt index from greater than 0.9 to 2.5 g/10 min and a second ethylene based polymer with a melt index from greater than 0.1 to 4.0 g/10 min, which is suitable for preparing films. On the other hand, the Japanese patent JP4622198, describes a polyethylene based resin composition blended with a scrap resin, which is suitable for preparing high stiffness containers with volumes preferably between 100 ml to 1500 ml. The patent further states that the ethylene co-polymer content of less than 24 wt.% is preferred to ensure improved moldability. In the examples provided in the patent JP4622198 appear to describe materials, which have Olsen stiffness in excess of 300 MPa. However, despite the technical solutions described in these publications, there remains a need to develop polyethylene compositions, which have an excellent balance of properties of high flexibility and high melt strength.

Therefore, it is an object of the present invention to provide a polyethylene compositions which can be suitably used in manufacturing high volume capacity containers and films and provides one or more of the following advantages of (i) high melt strength, (ii) high flexibility or low elastic modulus, and (iii) a desirable balance of impact and stiffness, and (iv) good or improved processability.

### DESCRIPTION

Accordingly, one or more objectives of the present invention is achieved by a polyethylene composition comprising:
a. ≥ 56.0 wt.% and ≤ 95.0 wt% of an ethylene polymer, with regard to the total weight of the polyethylene composition;
   - wherein the ethylene polymer has a density of ≥ 918 kg/m³ and ≤ 930 kg/m³, as determined in accordance with ASTM D1505 at 23°C; and
   - a molecular weight distribution (MWD) ≥ 15.0, preferably ≥ 20.0, wherein MWD is calculated by dividing the weight average molecular weight (Mw) by the number average molecular weight (Mn) and wherein Mw and Mn are measured in accordance with ASTM D6474-12; and
b. ≥ 5.0 wt.% and ≤ 44.0 wt.% of an ethylene alpha-olefin co-polymer, with regard to the total weight of the polyethylene composition, wherein the ethylene alpha-olefin co-polymer comprises at least i) a first ethylene alpha-olefin co-polymer; and/or ii) a second ethylene alpha-olefin co-polymer;
wherein, the polyethylene composition has a melt flow rate (MFR) of ≥ 0.3 g/10 min and ≤ 0.95 g/10 min, preferably ≥ 0.35 g/10 min and ≤ 0.8 g/10, preferably ≥ 0.4 g/10 min and ≤ 0.6 g/10min, as determined at 190°C at 2.16 kg load in accordance with ASTM D1238.

The inventors surprisingly found that that by purposefully blending an ethylene polymer and an ethylene alpha-olefin co-polymer at certain proportion, the resultant polyethylene composition has a suitable melt flow rate (MFR) and demonstrates excellent melt strength and flexibility while retaining the desired impact property. Advantageously, the polyethylene composition of the present invention also demonstrates excellent processability resulting from suitable molecular weight distribution (MWD) and shear thinning characteristics.

Optionally, the polyethylene composition may include stabilization additives. Non limiting examples of stabilization additives include anti-oxidants, UV stabilizers, anti-blocking agent, clarifying agents, pigments, masterbatch compositions and nucleating agents. Preferably, the stabilization additive is an anti-oxidant. Preferably, the polyethylene composition contains a combination of primary anti-oxidant and a secondary anti-oxidant. For example, the primary anti-oxidant may be IRGANOX^{®} 1010 while the secondary anti-oxidant may be Irgafos^{®} 168. The stabilization additive may be present in a suitable amount. Preferably, the stabilization additives are present in an amount ≥ 0.05 wt.% and ≤ 0.15 wt.%, with regard to the total weight of the polyethylene composition.

Preferably, the ethylene polymer has a melt flow rate (MFR) of ≥ 0.1 g/10 min and ≤ 0.9 g/10 min, preferably ≥ 0.2 g/10 min and ≤ 0.7 g/10 min, preferably ≥ 0.2 g/10 min and ≤ 0.5 g/10 min, as determined in accordance with ASTM D1238. The ethylene polymer may for example be selected from a Low Density Polyethylene (LDPE) polymer or any ethylene based polymer prepared using free radical polymerization or any ethylene polymer prepared in a high pressure tubular reactor. Preferably, the ethylene polymer is a Low Density Polyethylene (LDPE).

The ethylene alpha-olefin co-polymer may for example include i) a first ethylene alpha-olefin copolymer; and/or ii) a second ethylene alpha-olefin copolymer. The expression "and/or" as used herein means that the ethylene alpha-olefin copolymer can include a) any one of the first ethylene alpha-olefin copolymer or the second ethylene alpha-olefin copolymer, or b) include a combination of both the first ethylene alpha-olefin copolymer and the second ethylene alpha-olefin copolymer. Preferably, the ethylene alpha-olefin copolymer includes any one of the first ethylene alpha-olefin copolymer or the second ethylene alpha-olefin copolymer.

In some preferred aspects of the invention, the first ethylene alpha-olefin co-polymer and the second ethylene alpha-olefin co-polymer are compositionally different having distinct properties for example of density, melt flow rate and units derived from alpha-olefins. For example, in some aspects of the present invention, the first ethylene alpha-olefin copolymer may be referred to as a plastomer and the second ethylene alpha-olefin copolymer may be referred to as an elastomer. The plastomer and the elastomer copolymers may be distinguished on the basis of the weight quantity of units derived from alpha-olefins units, wherein the plastomer has a lower number of units derived from alpha-olefins compared to that of the elastomer.

The ethylene alpha-olefin copolymer may for example have a suitable molecular weight distribution (MWD) and melt flow rate (MFR) in order to impart the desired mechanical and melt strength properties to the polyethylene composition. Preferably, the ethylene alpha-olefin copolymer has:
- a molecular weight distribution (MWD) of ≤ 3.5, wherein MWD is calculated by dividing the weight average molecular weight (Mw) by the number average molecular weight (Mn) and wherein Mw and Mn are measured in accordance with ASTM D6474-12; and/or
- a melt flow rate (MFR) ≥ 0.05 g/10 min and ≤ 5.0 g/10 min, preferably ≥ 0.1 g/10 min and ≤ 2.0 g/10 min, as determined at 190°C at 2.16 kg load in accordance with ASTM D1238.

Preferably, the first ethylene alpha-olefin copolymer comprises units derived from (i) ethylene and (ii) ≥ 2.0 wt.% and ≤ 25.0 wt.%, preferably ≥ 10.0 wt.% and ≤ 20.0 wt.%, of units derived from one or more alpha-olefins having 3-12 carbon atoms, with regard to the total weight of the first ethylene alpha-olefin copolymer.

Preferably, the second ethylene alpha-olefin copolymer comprises units derived from (i) ethylene and (ii) > 25.0 wt.% and ≤ 45.0 wt.%, preferably ≥ 35.0 wt.% and ≤ 40.0 wt.%, of units derived from one or more alpha olefins having 3-12 carbon atoms, with regard to the total weight of the second ethylene alpha-olefin copolymer.

The alpha-olefin, may for example, is selected from 1-butene, 1-hexene, 4-methyl-1-pentene, 1-octene, or combinations thereof. Preferably the alpha-olefin is selected from 1-hexene or 1-octene. The alpha-olefin content may be determined by any suitable technique such as by ¹³C NMR on a Bruker Avance 500 spectrometer equipped with a cryogenically cooled probe head operating at 125°C, whereby samples to be evaluated are dissolved at 130°C in C₂D₂Cl₄ containing DBPC as stabilizer.

The first ethylene alpha-olefin copolymer and the second ethylene alpha-olefin copolymer may for example be distinguished based on their density. Preferably, for example:
- the first ethylene alpha-olefin copolymer has a density of ≥ 900 kg/m³ and ≤ 910 kg/m³, ≥ 902 kg/m³ and ≤ 906 kg/m³ as determined in accordance with ASTM D792 (2008); and/or
- the second ethylene alpha-olefin copolymer has a density of ≥ 850 kg/m³ and ≤ 900 kg/m³, ≥ 860 kg/m³ and ≤ 880 kg/m³, as determined in accordance with ASTM D792 (2008).

For imparting the desired properties to the inventive polyethylene composition, the first ethylene alpha-olefin copolymer and the second ethylene alpha-olefin copolymer may for example be present in different proportions in the polyethylene composition. For example, the polyethylene composition may comprise at least one of:
- ≥ 5.0 wt.% and ≤ 44.0 wt.%, preferably ≥ 25.0 wt.% and ≤ 40.0 wt.%, of the first ethylene alpha-olefin copolymer, with regard to the total weight of the polyethylene composition; and/or
- ≥ 5.0 wt.% and ≤ 25.0 wt.%, preferably ≥ 10.0 wt.% and ≤ 20.0 wt.%, of the second ethylene alpha-olefin copolymer, with regard to the total weight of the polyethylene composition.

In some aspects of the invention, the polyethylene composition may for example comprise a suitable proportion of the ethylene polymer, the first ethylene alpha-olefin copolymer or the second ethylene alpha-olefin copolymer and optionally some stabilization additives.

Preferably, the polyethylene composition of the present invention, comprises:
- ≥ 56.0 wt.% and ≤ 95.0 wt.%, preferably ≥ 60.0 wt.% and ≤ 75.0 wt.% of the ethylene polymer;
- ≥ 5.0 wt.% and ≤ 44.0 wt.%, preferably ≥ 25.0 wt.% and ≤ 40.0 wt.% of the first ethylene alpha-olefin copolymer; and
- ≥ 0 wt.% and ≤ 1.0 wt.%, preferably ≥ 0 wt.% and ≤ 0.5 wt.%, preferably ≥ 0 wt.% and ≤ 0.15 wt.% of stabilization additives;
with regard to the total weight of the polyethylene composition.

Preferably, the polyethylene composition of the present invention, comprises:
- ≥ 75.0 wt.% and ≤ 95.0 wt.%, preferably ≥ 80.0 wt.% and ≤ 90.0 wt.% of the ethylene polymer;
- ≥ 5.0 wt.% and ≤ 25.0 wt.%, preferably ≥ 10.0 wt.% and ≤ 20.0 wt.%, of the second ethylene alpha-olefin copolymer; and
- ≥ 0 wt.% and ≤ 1.0 wt.%, preferably ≥ 0 wt.% and ≤ 0.5 wt.%, preferably ≥ 0 wt.% and ≤ 0.15 wt.% of stabilization additives;
with regard to the total weight of the polyethylene composition.

The inventors for the present invention, surprisingly found that the polyethylene composition of the present invention demonstrates a suitable flexibility evidenced from the elastic modulus characteristics of the polyethylene composition. For example, the polyethylene composition, preferably has an elastic modulus of ≥ 150.0 MPa and ≤ 250.0 MPa, preferably ≥ 160.0 MPa and ≤ 230.0 MPa as determined in accordance with ASTM D638. At this range of elastic modulus, the polyethylene composition has a significant improvement in flexibility over that of ordinary ethylene polymers (e.g. LDPE polymers). Preferably, the elastic modulus of the polyethylene composition is at least 15% lower, preferably at least 20% lower, preferably at least 35% lower, than the elastic modulus of the ethylene polymer.

On the other hand, based on rheology data, the cross over frequency of the polyethylene composition of the present invention is sufficiently low indicating that even at low frequency, storage modulus (G') increases over loss modulus (G"), representing a greater solid-like elasticity of the polymer melt. In other words, lower the cross over frequency greater is the elastic character of the polymer melt (melt elasticity) and thereby greater the melt strength of the polyethylene composition. Preferably, the polyethylene composition, has a cross over frequency of ≥ 3.0 radian/sec and ≤ 30.0 radian/sec, preferably ≥ 3.0 radian/sec and ≤ 25.0 radian/sec, wherein the cross over frequency represents the frequency at which the storage modulus (G') of the polyethylene composition equals the loss modulus (G") of the polyethylene composition, when the storage modulus (G') and the loss modulus (G") are determined in accordance with ISO 6721-10 at a temperature of 190°C in a nitrogen environment using a parallel plate set-up, and at any frequency range of ≥ 0.5 and ≤ 500 radian/sec, at an oscillation strain of 5%.

In some aspects of the invention, the polyethylene composition has a suitable molecular weight. For example, the polyethylene composition preferably has a weight average molecular weight (Mw) of ≥ 250 kDa and ≤ 400 kDa, preferably ≥ 250 kDa and ≤ 380 kDa, wherein weight average molecular weight (Mw) is measured in accordance with ASTM D6474-12. The polyethylene composition, may for example, have a suitably high molecular weight distribution (MWD) and offers excellent processability. Preferably, the polyethylene composition has a molecular weight distribution (MWD) of ≥ 10.0 and ≤ 40.0, preferably ≥ 15.0 and ≤ 35.0, and ≥ 20.0 and ≤ 30.0, wherein (MWD) is determined by dividing the weight average molecular weight (Mw) by the number average molecular weight (Mn) and wherein Mw and Mn are measured in accordance with ASTM D6474-12.

Advantageously, in some aspects of the invention, the polyethylene composition of the present invention has a high Z-average molecular weight (Mz) indicating that the polyethylene composition of the present invention has excellent melt strength resulting from the presence of high molecular weight polymer species in the composition. Preferably, the polyethylene composition, has a Z-average molecular weight (Mz) of ≥ 1000 kDa and ≤ 4000 kDa, preferably ≥ 1050 kDa and ≤ 3050 kDa, wherein Z-average molecular weight (Mz) is measured in accordance with ASTM D6474-12.

In another aspect of the present invention, the value of Mz/Mw for the polyethylene composition also provides a suitable indication of high melt strength of the polymer composition. Preferably, the polyethylene composition has a ratio of Mz/Mw ≥ 4.0 and ≤ 10.0, preferably Mz/Mw ≥ 4.2 and ≤ 8.0, wherein Mz represents the Z-average molecular weight, Mw represents weight average molecular weight (Mw), wherein Mz and Mw are measured in accordance with ASTM D6474-12.

In some aspects of the invention, the polyethylene composition may have a lower density than that of the constituent ethylene polymer. Preferably, the polyethylene composition has a density of ≥ 905 kg/m³ and ≤ 917 kg/m³, preferably ≥ 908 kg/m³ and ≤ 915 kg/m³ as determined in accordance with ASTM D792 (2008).

The polyethylene composition has high storage modulus (G') even at low frequency or shear, indicating a suitable melt strength and processability characteristics of the polyethylene composition. Accordingly, the storage modulus (G') demonstrated by the polyethylene composition even at low frequency is indicative of the elastic solid like property of the polyethylene composition in its melt form when subjected to shearing. For example, at low frequency, the high melt strength property may indicate that upon exit from a die during molding or an extrusion process, the polymer melt will continue to resist flow and reduce any tendency for sagging. Preferably the polyethylene composition has a storage modulus (G') of ≥ 3.0 kPa and ≤ 6.0 kPa, preferably ≥ 3.0 kPa and ≤ 5.5 kPa, wherein storage modulus is determined in accordance with ISO 6721-10 at a temperature of 190°C in a nitrogen environment using a parallel plate set-up at a frequency of 0.5 radian/sec, and at an oscillation strain of 5%.

On the other hand, even at a higher frequency the polyethylene composition of the present invention has a desirable storage modulus (G') indicating suitable processability for the polyethylene composition. Preferably the polyethylene composition has a storage modulus (G') of ≥ 14.0 kPa and ≤ 24.0 kPa, wherein storage modulus is determined in accordance with ISO 6721-10 at a temperature of 190°C in a nitrogen environment using a parallel plate set-up at a frequency of 5.0 radian/sec, and at an oscillation strain of 5%. Preferably, the polyethylene composition has a storage modulus (G') of ≥ 3.0 kPa and ≤ 200.0 kPa, preferably ≥ 6.0 kPa and ≤ 190.0 kPa, preferably ≥ 10.0 kPa and ≤ 150.0 kPa, wherein storage modulus (G') is determined in accordance with ISO 6721-10 at a temperature of 190°C in a nitrogen environment using a parallel plate set-up at a frequency range of ≥ 0.5 and ≤ 500 radian/sec, and at an oscillation strain of 5%. The unit kPa as used herein means 10³ Pascal.

The polyethylene composition of the present invention may demonstrate shear thinning characteristics, rendering such a polyethylene composition suitable for processing under conditions of extrusion or injection molding. The expression "shearing thinning" as used herein means that the complex viscosity of the polyethylene composition reduces with increase in frequency or shear (non-Newtonian property of a visco-elastic polymer melt). One suitable way of expressing shear thinning is by determining the Shear Thinning Index (SHI) or the ratio of complex viscosity measured at two different frequency. A consequence of having high shear thinning property is that at low frequencies (e.g. at 0.5 radian/sec) the complex viscosity is suitably high, indicating a desirable melt strength while at high frequencies (e.g. at 500 radian/sec) the complex viscosity suitably decreases, indicating improved material flow property and thereby improved processability. Therefore, higher the Shear Thinning Index (SHI) greater would be the extent of shear thinning. Accordingly, the polyethylene composition preferably has a shear thinning index (SHI) of ≥ 25.0 and ≤ 75.0, preferably ≥ 30.0 and ≤ 50.0 wherein shear thinning index (SHI) is defined as the ratio η_{0.5}/η₅₀₀ where η₅₀₀ is the complex viscosity measured at 190°C at a frequency of 500 radian/sec in accordance with ISO 6721-10 and η_{0.5} is the complex viscosity measured at 190°C at a frequency of 0.5 radian/sec in accordance with ISO 6721-10.

On the other hand, complex viscosity of a polymer may be at a nearly constant value (Newtonian property of a visco-elastic polymer melt) at low frequency or shear and such complex viscosity is expressed as the zero shear viscosity of the composition. A high value of zero shear viscosity is indicative of excellent melt strength along with an excellent molecular weight distribution (MWD) of the polymer. Accordingly, the polyethylene composition preferably has a zero shear viscosity ≥ 100 kPa.s and ≤ 1000 kPa.s, preferably ≥ 400 kPa.s and ≤ 900 kPa.s, when determined in accordance with ASTM ISO 6721-10. The unit kPa.s as used herein means 10³ Pa.s.

In some aspects of the invention, the polyethylene composition demonstrates strain hardening characteristics under which the extensional viscosity of the polyethylene composition in its melt form increases with time at a constant deformation rate. The importance of strain hardening is particularly important during blow molding operations to manufacture large volume capacity containers and/or films where strain hardening characteristics minimize product defects by stabilizing the parison during blow molding or stabilize a free film during a blown film production. Preferably, the polyethylene composition has a Strain Hardening Coefficient (SHC) of ≥ 30.0 and ≤ 60.0, preferably ≥ 35.0 and ≤ 55.0, preferably ≥ 40.0 and ≤ 50.0, wherein Strain Hardening Coefficient (SHC) is defined as the ratio eta_{3.3}/eta_{0.1} wherein eta_{3.3} is the extensional viscosity measured at a temperature of 150 °C at time of 3.3 seconds using a strain rate of 1.0/second in accordance with ISO 20965 (2005) and eta_{0.1} is the extensional viscosity measured at a temperature of 150°C at time of 0.1 second using a strain rate of 1.0/second in accordance with ISO 20965 (2005). The time referred herein shows the period of time elapsed from the time a polymer melt exits a die in the molten form and is subjected to a constant strain.

The polyethylene composition may for example has a suitable impact strength as determined by the value of Gardner Impact Strength. Preferably, the polyethylene composition preferably has a Gardner Impact Strength of ≥ 2.0 Joules and ≤ 5.0 Joules, preferably ≥ 2.3 Joules and ≤ 4.5 Joules, wherein Gardner Impact Strength is determined in accordance with ASTM D 5420-10.

The polyethylene composition has a suitable balance of melt strength, impact property, and elastic modulus. Preferably, the polyethylene composition has at least one of:
- an elastic modulus of ≥ 150.0 MPa and ≤ 250.0 MPa, preferably ≥ 160.0 MPa and ≤ 230.0 MPa as determined in accordance with ASTM D638; and/or
- a molecular weight distribution (MWD) of ≥ 10.0 and ≤ 40.0, preferably of ≥ 15.0 and ≤ 35.0, preferably of ≥ 20.0 and ≤ 30.0, wherein (MWD) is determined by dividing the weight average molecular weight (Mw) by the number average molecular weight (Mn) and wherein Mw and Mn are measured in accordance with ASTM D6474-12; and/or
- a density of ≥ 905 kg/m³ and ≤ 917 kg/m³, preferably ≥ 908 kg/m³ and ≤ 915 kg/m³ as determined in accordance with ASTM D792 (2008); and/or
- a storage modulus (G') of ≥ 3.0 kPa and ≤ 200.0 kPa, preferably ≥ 6.0 kPa and ≤ 190.0 kPa, wherein storage modulus is determined according to ISO 6721-10 at a temperature of 190°C in a nitrogen environment using a parallel plate set-up at a frequency range of ≥ 0.5 and ≤ 500 radian/sec, and at an oscillation strain of 5%; and/or
- a shear thinning index (SHI) of ≥ 25.0 and ≤ 75.0, preferably ≥ 30.0 and ≤ 50.0 wherein shear thinning index (SHI) is defined as the ratio η_{0.5}/η₅₀₀ where η₅₀₀ is the complex viscosity measured at 190°C at a frequency of 500 radian/sec in accordance with ISO 6721-10 and η_{0.5} is the complex viscosity measured at 190°C at a frequency of 0.5 radian/sec in accordance with ISO 6721-10; and/or
- a zero shear viscosity ≥ 100 kPa.s and ≤ 1000 kPa.s in accordance with ISO 6721-10; and/or
- a Strain Hardening Coefficient (SHC) of ≥ 30.0 and ≤ 60.0, preferably ≥ 35.0 and ≤ 55.0, preferably ≥ 40.0 and ≤ 50.0, wherein Strain Hardening Coefficient (SHC) is defined as the ratio eta_{3.3}/eta_{0.1} wherein eta_{3.3} is the extensional viscosity measured at a temperature of 150°C at time of 3.3 seconds using a strain rate of 1.0/second in accordance with ISO 20965 (2005) and eta_{0.1} is the extensional viscosity measured at a temperature of 150°C at time of 0.1 second using a strain rate of 1.0/second in accordance with ISO 20965 (2005); and/or
- a Gardner Impact Strength of ≥ 2.0 Joules and ≤ 5.0 Joules, wherein Gardner Impact Strength is determined in accordance with ASTM D 5420-10; and/or
- ratio of Mz/Mw of ≥ 4.0 and ≤ 10.0, preferably Mz/Mw ≥ 4.2 and ≤ 8.0, wherein Mz represents the Z-average molecular weight, Mw represents weight average molecular weight, wherein Mz and Mw are measured according to ASTM D6474-12; and/or
- a cross over frequency of ≥ 3.0 radian/sec and ≤ 30.0 radian/sec, ≥ 3.0 radian/sec and ≤ 25.0 radian/sec, wherein the cross over frequency represents the frequency at which the storage modulus (G') of the polyethylene composition equals the loss modulus (G") of the polyethylene composition, when the storage modulus and the loss modulus are determined in accordance with ISO 6721-10 at a temperature of 190°C in a nitrogen environment using a parallel plate set-up, and at any frequency range of ≥ 0.5 and ≤ 500 radian/sec, at an oscillation strain of 5%.

In some aspects of the invention, the present invention relates to a process for preparing a polyethylene composition comprising the steps of:
- dry blending the ethylene polymer and the ethylene alpha-olefin copolymer to form a blended composition precursor;
- melt-blending, preferably co-extruding, the blended composition precursor to form the polyethylene composition.

The step of dry blending may for example be carried out in V-blender at a temperature below 40°C, preferably at a temperature between 25°C and 35°C. The dry blending process may for example be carried out for a time period not greater than 6 minutes, preferably for a time period not greater than 5 minutes, and at mixing speed preferably between 700-850 rpm.

The melt blending process may for example be carried out in an extruder at any temperature between 190°C - 220°C. The extruder, may for example be segmented into several extrusion zones with the initial or the first extrusion zone being calibrated at an extrusion temperature between 30°C-35°C and subsequent zones can have temperature as high as 200°C. In some aspects of the invention, the melt temperature during the melt blending process is maintained at any suitable temperature, for example, the melt temperature may be maintained at around 212°C. The die temperature may be maintained at any suitable temperature, for example, at any temperature between 190°C - 210°C, or preferably the die temperature is maintained at 200°C. The melt pressure may be maintained at any suitable pressure, for example, between 85 bar - 120 bar.

The ethylene polymer and the ethylene alpha-olefin copolymer may be prepared in the manner described in existing publications such as the production of LDPE and LLDPE polymers described in the publication "Handbook of Polyethylene" by Andrew Peacock (2000; Dekker; ISBN 0824795466) at pages 43-66. The ethylene alpha-olefin copolymer is preferably prepared using Ziegler-Natta catalyst or metallocene catalysts using any one of gas-phase fluidized-bed polymerization, polymerization in solution, or slurry polymerization, preferably the ethylene alpha-olefin copolymer is prepared using metallocene catalysts using gas-phase polymerization. Alternatively, the inventive polyethylene composition may be prepared using commercially available polymers blended in specific proportions.

Advantageously, the polyethylene composition of the present invention, may be used for preparing articles, having excellent flexibility and impact property while being processed without the defects associated with sagging and bubble stability. For example, the article comprising the polyethylene composition of the present invention, is preferably selected from a container, a film, a healthcare article, a packaging material, or a post consumer recyclate (PCR) material. The polyethylene composition, may for example, is used for forming a large volume capacity containers (e.g. >1.5 litres) with uniform wall thickness and is free of any defects attributed to sagging.

Preferably, the article is a container having a volume capacity of ≥ 1.5 litres, preferably having a volume capacity of ≥ 5.0 litres, preferably the article is a container having a volume capacity of ≥ 1.5 litres and ≤ 10.0 litres. Preferably, the container has a wall thickness of ≥ 750 µm, preferably ≥ 1000 µm and ≤ 1500 µm. Non-limiting examples of containers include bottles, jerry cans, squeeze bottles and pouches.

The invention is further directed to a process for preparing an article comprising the polyethylene composition of the present invention, wherein the process comprises the steps of:
- providing the polyethylene composition as described in the present disclosure;
- processing the polyolefin composition and forming the article, wherein processing comprises for example any one of extrusion, injection moulding, blow moulding, melt blending, slush moulding, roto-moulding, preferably processing comprises blow moulding the polyethylene composition.

The invention is further directed to the use of the articles comprising the polyethylene composition of the present invention having improved flexibility and uniform thickness.

Specific examples demonstrating some of the embodiments of the invention are included below. The examples are for illustrative purposes only and are not intended to limit the invention. It should be understood that the embodiments and the aspects disclosed herein are not mutually exclusive and such aspects and embodiments can be combined in any way. Those of ordinary skill in the art will readily recognize parameters that can be changed or modified to yield essentially the same results.

### EXAMPLES

For the purposes of exemplifying the present invention, four inventive formulations (IE1-IE4) were prepared and its properties were compared with that of three comparative formulations (CE1-CE3). The details of the formulations are provided below:

**Table 1**

| | Polymer Type | Grade Name | Supplier |
|---|---|---|---|
| Ethylene Polymer | Low Density Polyethylene (LDPE) | SABIC^{®} LDPE HP0322NN | SABIC |
| Ethylene Polymer | Low Density Polyethylene (LDPE) | SABIC^{®} LDPE HP2023JN | SABIC |
| Ethylene Polymer | Low Density Polyethylene (LDPE) | SABIC^{®} HP4023WN | SABIC |
| First Ethylene-alpha olefin co-polymer | Plastomer (POP) | COHERE^{™} 8102 | SABIC |
| Second Ethylene-alpha olefin co-polymer | Elastomer (POE) | COHERE^{™} 8170D | SABIC |

IE1 and IE2 are based on a blend of LDPE and POE (Elastomer), while IE3 and IE4 are blends of LDPE with POP (Plastomers). On the other hand, CE1 is a comparative formulation, which is composed primarily of LDPE (i.e free of plastomers or elastomers). CE2 and CE3 are comparative examples with blends of LDPE with POE. The details for the grades are as provided below:

**Table 2**

| Grade | Density | Melt Flow Rate (MFR) at 190°C and 2.16 kg ASTM 1238 |
|---|---|---|
| SABIC^{®} LDPE HP0322NN (For IE1-IE4, CE1) | 922**:** ASTM 1505 @ 23 ⁰C kg/m³ | 0.33 |
| SABIC^{®} HP4023WN (For CE2) | 923: ASTM 1505 @ 23 ⁰C kg/m³ | 4.0 |
| SABIC^{®} LDPE HP2023JN (For CE3) | 923: ASTM 1505 @ 23 ⁰C kg/m³ | 2.0 |
| COHERE^{™} 8102 | 902 - ASTM 792 | 1.0 |
| COHERE^{™} 8170D | 868 - ASTM 792 | 1.0 |

The table below provides the details of the inventive and comparative composition in terms of the blend proportions.

**Table 3**

| Sample Reference | Blend Characteristics | Ethylene polymer | Ethylene-alpha olefin copolymer | |
|---|---|---|---|---|
| | | | First ethylene alpha-olefin co-polymer | Second ethylene alpha-olefin co-polymer |
| IE1 | 90% LDPE + 10% POE | 90% LDPE - HP0322NN | NA | 10% POE-COHERE^{™} 8170D |
| IE2 | 80% LDPE + 20% POE | 80% LDPE - HP0322NN | NA | 20% POE-COHERE^{™} 8170D |
| IE3 | 70% LDPE + 30% POP | 70% LDPE - HP0322NN | 30% - COHERE^{™} 8102 | NA |
| IE4 | 60% LDPE + 40% POP | 60% LDPE - HP0322NN | 40% - COHERE^{™} 8102 | NA |
| CE1 | 100% LDPE | 100% LDPE - HP0322NN | NA | NA |
| CE2 | 55% LDPE + 45% POE | 55% LDPE - HP4023WN | NA | 45% POE-COHERE^{™} 8170D |
| CE3 | 55% LDPE + 45% POE | 55% LDPE - HP2023JN | NA | 45% POE - COHERE^{™} 8170D |

The blends were prepared by i) dry blending the ethylene polymer and the ethylene alpha-olefin copolymer to form a blended composition precursor, followed by ii) melt-blending, preferably co-extruding, the blended composition precursor to form the polyethylene composition. The conditions for dry blending and melt blending are as provided below:

**Table 4**

| Dry Blending in a V Blender | Parameters |
|---|---|
| Temperature for dry blending | 30°C |
| Time for dry blending | 3 minutes |
| Speed of mixer | 800 rpm |

**Table 5**

| Melt-blending | Parameters |
|---|---|
| Die Temperature | 200°C |
| Melt Temperature | 212°C |
| Torque | 67 % |
| Melt Pressure (bar) | 85 to 116 depending on formulation |
| Screw Speed | 220 rpm |
| Temperature Extrusion Zone 1 | 35°C |
| Temperature Extrusion Zones 5-8 | 195°C |
| Temperature Extrusion Zones 9-12 | 200°C |

### Test protocols and standards used for measurement is as follows:

Elastic Modulus: was determined using the procedure set forth under ASTM D638. Sample specimens were tested as per ASTM D638 on injection molding specimens type-1 by Zwick/Roell Z010 UTM. Once clamped, specimens were pulled vertically (tension mode) at a rate of 50 mm/min. Contact-extensometer (MakroXtens) was used with a gage length of 50 mm.

Gardner Impact Strength Test: was determined using the procedure set forth under ASTM D5420-10. In particular, compression molded sheets were prepared and cut to ~ 1.5X1.5 inch plaques. Test was used to determine ranking of materials according to the mean failure energy required to break the samples by striking free falling weights, following the staircase method in accordance with ASTM D5420-10. A steel-rod impact mass weighing 8 lb was used at different drop height levels with 1 inch incremental height. Once Mean Failure Height was calculated, Mean Failure Energy was reported in in.lbf and converted to Joules (1 inch.lbf = 0.11 Joules).

Storage Modulus, Loss modulus, Complex Viscosity, Zero Shear Viscosity: was determined in accordance with ISO 6721-10. Rheology measurements were carried out using an ARES-G2 rheometer using 25 mm parallel plates at temperatures of 190 °C. The frequency sweep was carried out at any frequencies ≥ 0.5 radian/sec and ≤ 500 radian/sec. Cross over frequency and Shear Thinning Index (SHI) values were derived from the values determined using rheometry analysis. Parameters such as cross over point was determined by extrapolation.

Extensional Viscosity: was determined in accordance with ISO 20965 (2005). Extensional experiments were performed at 150 °C at a strain rate of 1.0/sec using a SER2 attachment to the ARES-G2 rheometer with an Extensional Viscosity Fixture (EVF). The Strain Hardening Coefficient (SHC) was derived from the extensional viscosity data.

Melt Flow Rate (MFR): was determined at 190 °C at 2.16 kg load (ASTM D1238).

Density: was determined in accordance with ASTM D792 (2008) (kg/m³).

Molecular Weight: The different molecular weights were determined in accordance with ASTM D6474-12. Mₙ is the number average molecular weight, M_{w} is the weight average molecular weight, and M_{z} is the z-average molecular weight, each expressed in kDa.

Results: The results from the above experiments are tabulated in the table below.

**Table 6**

| | **IE1** | **IE2** | **IE3** | **IE4** | **CE1** | **CE2** | **CE3** |
|---|---|---|---|---|---|---|---|
| **MFR** | 0.325 | 0.371 | 0.418 | 0.462 | 0.293 | 2.09 | 1.45 |
| Density kg/m³ | 915.4 | 910.2 | 914.2 | 912.6 | 919.5 | 894.7 | 898.2 |
| Elastic Modulus (MPa) | 226 | 176 | 208.8 | 181 | 284.6 | 59.4 | 79.8 |
| Gardner Impact Strength Test (Joules) | 2.68 | 2.67 | 3.11 | 3.31 | 2.64 | No failure observed | No failure observed |
| Cross over frequency (radian/sec) | 3.5 | 8 | 9 | 22 | 2 | 65 | 40 |
| Storage Modulus (G') (kPa) @ 0.5 radian/sec | 4.4 | 3.46 | 4.55 | 4.13 | 4.84 | 1.16 | 2.25 |
| Storage Modulus (G') (kPa) @ 500 radian/sec | 130.4 | 126.23 | 172.97 | 189.48 | 128.96 | 155.23 | 158.51 |
| Mw (kDa) | 310 | 300 | 260 | 235 | 330 | 150 | 150 |
| Mn (kDa) | 14 | 15 | 16 | 17 | 14 | 17 | 15 |
| Mz(kDa) | 1300 | 1300 | 1400 | 1300 | 1300 | 470 | 470 |
| Mw/Mn (MWD) | 22.14 | 20.0 | 16.25 | 13.82 | 23.57 | 8.82 | 10.0 |
| Mz/Mw | 4.19 | 4.33 | 5.38 | 5.53 | 3.93 | 3.13 | 3.13 |
| Zero Shear Viscosity (kPa.s) | 472.3 | 443.0 | 650.0 | 856.10 | 472.84 | 22.215 | 98.49 |
| Complex Viscosity η₅₀₀ (kPa.s) @ 500 radian/sec | 0.321 | 0.31 | 0.43 | 0.48 | 0.31 | 0.39 | 0.4 |
| Complex Viscosity η_{0.5} (Pa.s) @ 0.5 radian/sec | 14.49 | 11.92 | 15.52 | 14.86 | 15.76 | 6.84 | 9.86 |
| Shear Thinning Index (SHI) - η_{0.5}/η₅₀₀ | 45.14 | 38.45 | 36.09 | 30.96 | 50.84 | 17.53 | 24.65 |
| Elongational Viscosity @ 3.3 seconds (Eta_{3.3}) kPa.s | 1262.68 | 1267.51 | 1198.00 | 983.83 | 1260.00 | 288.26 | 428.44 |
| Elongational Viscosity @ 0.1 seconds (Eta_{0.1}) kPa.s | 22.58 | 26.78 | 25.51 | 26.08 | 25.96 | 13.346 | 16.23 |
| Strain Hardening Coefficient (SHC) - eta_{3.3}/eta_{0.1} | 55.92 | 47.33 | 46.96 | 37.72 | 48.53 | 21.6 | 26.37 |

From the results provided under Table 6, it is evident that the inventive polyethylene compositions (IE1-IE4) demonstrate a previously unseen balance of excellent flexibility, rheological and impact properties. The inventive formulations (IE1-IE4) demonstrate a significantly lower melt flow rate (MFR) compared to the polymer formulations CE2 and CE3. For example, IE1 has nearly 85% lower MFR than that of CE2 composition. Along with melt flow rate, other rheological properties such as Shear Thinning Index, storage modulus, molecular weight distribution (MWD), Strain Hardening Coefficient (SHC) and zero shear viscosity, for the inventive formulations (IE1-IE4) indicate that the inventive polyethylene compositions have excellent melt strength and processability when compared to that of the compositions CE2 and CE3. For example, strain hardening coefficient (SHC), which is directly correlated to melt strength, shows that the IE1 has a SHC, which is nearly 160% higher than that of the SHC for CE2 composition. Similarly, from the cross over frequency data, it is evident that the inventive formulations (IE1-IE4) have a much lower frequency for cross over than that of CE2 and CE3, indicating the improved processability of the inventive formulations with higher solid elastic character in its melt form. It is believed that a combination of one or more factors of suitable melt flow rate (MFR) along with a suitable blend proportion of LDPE polymer with that of the plastomer (POP) or the elastomer (POE) may have imparted excellent melt strength and processing characteristics to the inventive compositions (IE1-IE4) over that of compositions CE2 or CE3.

On the other hand LDPE polymer grade CE1, exhibited excellent melt strength and processability properties. However, it is also evident that the elastic modulus for the CE1 sample is at least 26% higher and in some instances (IE2 vs CE1) at least 60% higher than the inventive compositions (IE1-IE4), indicating that CE1 composition has reduced flexibility.

Further, the inventors surprisingly found that the inventive samples (IE1-IE4) in certain parameters demonstrated improved performance from even existing LDPE commercial grades (CE1). For example, Mz/Mw for IE3 and IE4 formulations were improved (nearly 40% higher) in comparison to CE1 formulations; storage modulus at high frequency for IE4 was improved, nearly 47% higher over that of the CE1 formulation and strain hardening co-efficient (SHC) for IE1 composition was improved by as much as 15% (higher) over that of CE1 formulation.

Although, the formulation CE2 and CE3 demonstrated lower elastic modulus and impact properties, their melt strength and processability parameters were significantly lower than the inventive formulations (IE1-IE4). It may be further noted, that the comparative formulations CE2 and CE3 demonstrate very low density and would render such formulations unsuitable for containers, which require relatively high stacking property.

The inventive formulation IE1, IE2 and the comparative formulations CE1, CE2, and CE3 were further subjected to blow molding to form containers with volume capacity of 1.5 litres. The conditions for blow molding are provided below:

**Table 7**

| Blow molding conditions for 1.5 litres | Parameters |
|---|---|
| Blowing Time | 22 second |
| Output | 1.00 kg/h |
| Container Weight | ~ 173 g |
| Die Temperature | 190°C |
| Cycle Time | 19 second |
| Screw Speed | 52 rpm |
| Temperature Extrusion Zone 1 | 185°C |
| Temperature Extrusion Zone 4 | 195°C |
| Temperature Extrusion Zone 5 | 200°C |

It was found that containers with a volume capacity of 1.5 litres were prepared with minimal defects in wall thickness while achieving suitable flexibility when using IE1 and IE2 formulations. On the other hand, formulations CE2 and CE3 could not be used for preparing due to excess sagging of the polymer material during the blow molding.

**Table 8**

| 1.5 L volume capacity containers prepared from formulation | Uniformity of wall thickness by visual inspection | Flexibility by visual inspection |
|---|---|---|
| IE1 | +++ | +++ |
| IE2 | +++ | +++ |
| CE1 | +++ | + |
| CE2 | Containers could not be formed due to high sagging | Containers could not be formed due to sagging |
| CE3 | Containers could not be formed due to high sagging | Containers could not be formed due to high sagging |

## Claims

1. A polyethylene composition, comprising:
• ≥ 56.0 wt.% and ≤ 95.0 wt.% of an ethylene polymer, with regard to the total weight of the polyethylene composition;
• wherein the ethylene polymer has a density of ≥ 918 kg/m³ and ≤ 930 kg/m³, as determined in accordance with ASTM D1505 at 23 °C;
• a molecular weight distribution (MWD) ≥ 15.0, preferably ≥ 20.0, wherein (MWD) is calculated by dividing the weight average molecular weight (Mw) by the number average molecular weight (Mn) and wherein Mw and Mn are measured in accordance with ASTM D6474-12; and
• ≥ 5.0 wt.% and ≤ 44.0 wt.% of an ethylene alpha-olefin co-polymer, with regard to the total weight of the polyethylene composition, wherein the ethylene alpha-olefin co-polymer comprises at least i) a first ethylene alpha-olefin co-polymer; and/or ii) a second ethylene alpha-olefin co-polymer;
wherein, the polyethylene composition has a melt flow rate (MFR) ≥ 0.3 g/10 min and ≤ 0.95 g/10 min, preferably ≥ 0.35 g/10 min and ≤ 0.8 g/10, preferably ≥ 0.4 g/10 min and ≤ 0.6 g/10min, as determined at 190°C at 2.16 kg load in accordance with ASTM D1238.

2. The polyethylene composition according to claim 1, wherein the ethylene alpha-olefin co-polymer has:
• a molecular weight distribution (MWD) of ≤ 3.5, wherein MWD is calculated by dividing the weight average molecular weight (Mw) by the number average molecular weight (Mn) and wherein Mw and Mn are measured in accordance with ASTM D6474-12; and/or
• a melt flow rate (MFR) ≥ 0.05 g/10 min and ≤ 5.0 g/10 min, preferably ≥ 0.1 g/10 min and ≤ 2.0 g/10 min, as determined at 190°C at 2.16 kg load in accordance with ASTM D1238.

3. The polyethylene composition according to any one of claims 1-2, wherein the polyethylene composition comprises at least one of:
• ≥ 5.0 wt.% and ≤ 44.0 wt.%, preferably ≥ 25.0 wt.% and ≤ 40.0 wt.%, of the first ethylene alpha-olefin copolymer, with regard to the total weight of the polyethylene composition; and/or
• ≥ 5.0 wt.% and ≤ 25.0 wt.%, preferably ≥ 10.0 wt.% and ≤ 20.0 wt.%, of the second ethylene alpha-olefin copolymer, with regard to the total weight of the polyethylene composition.

4. The polyethylene composition according to any one of claims 1-3, wherein the first ethylene alpha-olefin copolymer comprises units derived from (i) ethylene and (ii) ≥ 2.0 wt.% and ≤ 25.0 wt.%, preferably ≥ 10.0 wt.% and ≤ 20.0 wt.%, of units derived from one or more alpha-olefins having 3-12 carbon atoms, with regard to the total weight of the first ethylene alpha-olefin copolymer.

5. The polyethylene composition according to any one of claims 1-4, wherein the second ethylene alpha-olefin copolymer comprises units derived from (i) ethylene and (ii) > 25.0 wt.% and ≤ 45.0 wt.%, preferably ≥ 35.0 wt.% and ≤ 40.0 wt.%, of units derived from one or more alpha olefins having 3-12 carbon atoms, with regard to the total weight of the second ethylene alpha-olefin copolymer.

6. The polyethylene composition according to any one of claims 4-5, wherein the alpha-olefin is selected from 1-butene, 1-hexene, 4-methyl-1-pentene, 1-octene, or combinations thereof, preferably the alpha-olefin is selected from 1-hexene or 1-octene.

7. The polyethylene composition according to any one of claims 1-6, wherein the polyethylene composition, comprises:
• ≥ 56.0 wt.% and ≤ 95.0 wt.%, preferably ≥ 60.0 wt.% and ≤ 75.0 wt.%, of the ethylene polymer;
• ≥ 5.0 wt.% and ≤ 44.0 wt.%, preferably ≥ 25.0 wt.% and ≤ 40.0 wt.% of the first ethylene alpha-olefin copolymer; and
• ≥ 0 wt.% and ≤ 1.0 wt.%, preferably ≥ 0 wt.% and ≤ 0.5 wt.%, preferably ≥ 0 wt.% and ≤ 0.15 wt.%, of stabilization additives;
with regard to the total weight of the polyethylene composition.

8. The polyethylene composition according to any one of claims 1-6, wherein the polyethylene composition, comprises:
• ≥ 75.0 wt.% and ≤ 95.0 wt.%, preferably ≥ 80.0 wt.% and ≤ 90.0 wt.% of the ethylene polymer;
• ≥ 5.0 wt.% and ≤ 25.0 wt.%, preferably ≥ 10.0 wt.% and ≤ 20.0 wt.%, of the second ethylene alpha-olefin copolymer; and
• ≥ 0 wt.% and ≤ 1.0 wt.%, preferably ≥ 0 wt.% and ≤ 0.5 wt.%, preferably ≥ 0 wt.% and ≤ 0.15 wt.% of stabilization additives;
with regard to the total weight of the polyethylene composition.

9. The polyethylene composition according to any one of claims 1-8, wherein:
• the first ethylene alpha-olefin copolymer has a density ≥ 900 kg/m³ and ≤ 910 kg/m³, as determined in accordance with ASTM D792 (2008); and/or
• the second ethylene alpha-olefin copolymer has a density ≥ 850 kg/m³ and ≤ 900 kg/m³, as determined in accordance with ASTM D792 (2008).

10. The polyethylene composition according to any one of claims 1-9, wherein the polyethylene composition has at least one of :
• an elastic modulus of ≥ 150.0 MPa and ≤ 250.0 MPa, preferably ≥ 160.0 MPa and ≤ 230.0 MPa as determined in accordance with ASTM D638; and/or
• a molecular weight distribution (MWD) of ≥ 10.0 and ≤ 40.0, preferably of ≥ 15.0 and ≤ 35.0, preferably of ≥ 20.0 and ≤ 30.0, wherein (MWD) is determined by dividing the weight average molecular weight (Mw) by the number average molecular weight (Mn) and wherein Mw and Mn are measured in accordance with ASTM D6474-12; and/or
• a density of ≥ 905 kg/m³ and ≤ 917 kg/m³, preferably ≥ 908 kg/m³ and ≤ 915 kg/m³ as determined in accordance with ASTM D792 (2008); and/or
• a storage modulus (G') of ≥ 3.0 kPa and ≤ 200.0 kPa, preferably ≥ 6.0 kPa and ≤ 190.0 kPa, wherein storage modulus (G') is determined accordance with ISO 6721-10 at a temperature of 190°C in a nitrogen environment using a parallel plate set-up at a frequency range of ≥ 0.5 and ≤ 500 radian/sec, and at an oscillation strain of 5%; and/or
• a shear thinning index (SHI) of ≥ 25.0 and ≤ 75.0, preferably ≥ 30.0 and ≤ 50.0 wherein shear thinning index (SHI) is defined as the ratio η_{0.5}/η₅₀₀ where η₅₀₀ is the complex viscosity measured at 190°C at a frequency of 500 radian/sec in accordance with ISO 6721-10 and η_{0.5} is the complex viscosity measured at 190°C at a frequency of 0.5 radian/sec in accordance with ISO 6721-10; and/or
• a zero shear viscosity ≥ 100.0 kPa.s and ≤ 10,00.0 kPa.s in accordance with ISO 6721-10; and/or
• a Strain Hardening Coefficient (SHC) of ≥ 30.0 and ≤ 60.0, preferably ≥ 35.0 and ≤ 55.0, preferably ≥ 40.0 and ≤ 50.0, wherein Strain Hardening Coefficient (SHC) is defined as the ratio eta_{3.3}/eta_{0.1} wherein eta_{3.3} is the extensional viscosity measured at a temperature of 150°C at time of 3.3 seconds using a strain rate of 1.0/second in accordance with ISO 20965 (2005) and eta_{0.1} is the extensional viscosity measured at a temperature of 150°C at time of 0.1 second using a strain rate of 1.0/second in accordance with ISO 20965 (2005); and/or
• a Gardner Impact Strength of ≥ 2.0 Joules and ≤ 5.0 Joules, wherein Gardner Impact Strength is determined in accordance with ASTM D 5420-10; and/or
• ratio of Mz/Mw of ≥ 4.0 and ≤ 10.0, preferably Mz/Mw of ≥ 4.2 and ≤ 8.0, wherein Mz represents the Z-average molecular weight, Mw represents weight average molecular weight, wherein Mz and Mw are measured according to ASTM D6474-12; and/or
• a cross over frequency of ≥ 3.0 radian/sec and ≤ 30.0 radian/sec, preferably ≥ 3.0 radian/sec and ≤ 25.0 radian/sec, wherein the cross over frequency represents the frequency at which storage modulus (G') of the polyethylene composition equals loss modulus (G") of the polyethylene composition, when the storage modulus (G') and the loss modulus (G") are determined in accordance with ISO 6721-10 at a temperature of 190°C in a nitrogen environment using a parallel plate set-up, and at any frequency of ≥ 0.5 radian/sec and ≤ 500 radian/sec, at an oscillation strain of 5%.

11. A process for preparing the polyethylene composition according to any one of claims 1-10, comprising:
• dry blending the ethylene polymer and the ethylene alpha-olefin copolymer to form a blended composition precursor; and
• melt-blending, preferably co-extruding, the blended composition precursor to form the polyethylene composition.

12. An article comprising the polyethylene composition according to any one of claims 1-10 or an article prepared according to the process of claim 11, wherein the article is selected from a container, a film, a healthcare article, a packaging material, or a post consumer recyclate (PCR) material.

13. The article according to claim 12, wherein the article is a container having a volume capacity of ≥ 1.5 litres, preferably having a volume capacity of ≥ 5.0 litres, preferably the article is a container having a volume capacity of ≥ 1.5 litres and ≤ 10.0 litres.

14. A process for preparing the article according to any one of claims 12-13, wherein the process comprises the steps of:
• providing the polyethylene composition according to any one of claims 1-10;
• processing the polyolefin composition and forming the article, wherein processing comprises any one of extrusion, injection moulding, blow moulding, melt blending, slush moulding, roto-moulding, preferably processing comprises blow moulding the polyethylene composition.

15. Use of the article according to any one of claims 12-13 or an article prepared according claim 14, having improved flexibility and uniform thickness.

## Patentansprüche

1. Polyethylenzusammensetzung, umfassend:
- ≥ 56,0 Gew.-% und ≤ 95,0 Gew.-% eines Ethylenpolymers, bezogen auf das Gesamtgewicht der Polyethylenzusammensetzung;
- wobei das Ethylenpolymer eine Dichte von ≥ 918 kg/m³ und ≤ 930 kg/m³ aufweist, wie gemäß ASTM D1505 bei 23 °C bestimmt;
- eine Molekulargewichtsverteilung (MWD) ≥ 15,0, vorzugsweise ≥ 20,0, wobei (MWD) durch Dividieren des gewichtsmittleren Molekulargewichts (Mw) durch das zahlenmittlere Molekulargewicht (Mn) berechnet wird und wobei Mw und Mn gemäß ASTM D6474-12 gemessen werden; und
- ≥ 5,0 Gew.-% und ≤ 44,0 Gew.-% eines Ethylen-Alpha-Olefin-Copolymers, bezogen auf das Gesamtgewicht der Polyethylenzusammensetzung, wobei das Ethylen-Alpha-Olefin-Copolymer mindestens i) ein erstes Ethylen-Alpha-Olefin-Copolymer; und/oder ii) ein zweites Ethylen-Alpha-Olefin-Copolymer umfasst;
wobei die Polyethylenzusammensetzung eine Schmelzflussrate (MFR) ≥ 0,3 g/10 min und ≤ 0,95 g/10 min, vorzugsweise ≥ 0,35 g/10 min und ≤ 0,8 g/10, vorzugsweise ≥ 0,4 g/10 min und ≤ 0,6 g/10 min, wie bei 190 °C und 2,16 kg Last gemäß ASTM D1238 bestimmt.

2. Polyethylenzusammensetzung nach Anspruch 1, wobei das Ethylen-Alpha-Olefin-Copolymer Folgendes aufweist:
- eine Molekulargewichtsverteilung (MWD) von ≤ 3,5, wobei MWD durch Dividieren des gewichtsmittleren Molekulargewichts (Mw) durch das zahlenmittlere Molekulargewicht (Mn) berechnet wird und wobei Mw und Mn gemäß ASTM D6474-12 gemessen werden; und/oder
- eine Schmelzflussrate (MFR) ≥ 0,05 g/10 min und ≤ 5,0 g/10 min, vorzugsweise ≥ 0,1 g/10 min und ≤ 2,0 g/10 min, wie bei 190 °C bei 2,16 kg Last gemäß ASTM D1238 bestimmt.

3. Polyethylenzusammensetzung nach einem der Ansprüche 1-2, wobei die Polyethylenzusammensetzung mindestens eines des Folgenden umfasst:
- ≥ 5,0 Gew.-% und ≤ 44,0 Gew.-%, vorzugsweise ≥ 25,0 Gew.-% und ≤ 40,0 Gew.-%, des ersten Ethylen-Alpha-Olefin-Copolymers, bezogen auf das Gesamtgewicht der Polyethylenzusammensetzung; und/oder
- ≥ 5,0 Gew.-% und ≤ 25,0 Gew.-%, vorzugsweise ≥ 10,0 Gew.-% und ≤ 20,0 Gew.-%, des zweiten Ethylen-Alpha-Olefin-Copolymers, bezogen auf das Gesamtgewicht der Polyethylenzusammensetzung.

4. Polyethylenzusammensetzung nach einem der Ansprüche 1-3, wobei das erste Ethylen-Alpha-Olefin-Copolymer Einheiten umfasst, die abgeleitet sind von (i) Ethylen und (ii) ≥ 2,0 Gew.-% und ≤ 25,0 Gew.-%, vorzugsweise ≥ 10,0 Gew.-% und ≤ 20,0 Gew.-% von Einheiten, die von einem oder mehreren Alpha-Olefinen mit 3-12 Kohlenstoffatomen abgeleitet sind, bezogen auf das Gesamtgewicht des ersten Ethylen-Alpha-Olefin-Copolymers.

5. Polyethylenzusammensetzung nach einem der Ansprüche 1-4, wobei das zweite Ethylen-Alpha-Olefin-Copolymer Einheiten umfasst, die abgeleitet sind von (i) Ethylen und (ii) ≥ 25,0 Gew.-% und ≤ 45,0 Gew.-%, vorzugsweise ≥ 35,0 Gew.-% und ≤ 40,0 Gew.-% von Einheiten, die von einem oder mehreren Alpha-Olefinen mit 3-12 Kohlenstoffatomen abgeleitet sind, bezogen auf das Gesamtgewicht des zweiten Ethylen-Alpha-Olefin-Copolymers.

6. Polyethylenzusammensetzung nach einem der Ansprüche 4-5, wobei das Alpha-Olefin aus 1-Buten, 1-Hexen, 4-Methyl-1-penten, 1-Octen oder Kombinationen davon ausgewählt ist, wobei das Alpha-Olefin vorzugsweise aus 1-Hexen oder 1-Octen ausgewählt ist.

7. Polyethylenzusammensetzung nach einem der Ansprüche 1-6, wobei die Polyethylenzusammensetzung Folgendes umfasst:
- ≥ 56,0 Gew.-% und ≤ 95,0 Gew.-%, vorzugsweise ≥ 60,0 Gew.-% und ≤ 75,0 Gew.-% des Ethylenpolymers;
- ≥ 5,0 Gew.-% und ≤ 44,0 Gew.-%, vorzugsweise ≥ 25,0 Gew.-% und ≤ 40,0 Gew.-% des ersten Ethylen-Alpha-Olefin-Copolymers; und
- ≥ 0 Gew.-% und ≤ 1,0 Gew.-%, vorzugsweise ≥ 0 Gew.-% und ≤ 0,5 Gew.-%, vorzugsweise ≥ 0 Gew.-% und ≤ 0,15 Gew.-% Stabilisierungsadditive;
bezogen auf das Gesamtgewicht der Polyethylenzusammensetzung.

8. Polyethylenzusammensetzung nach einem der Ansprüche 1-6, wobei die Polyethylenzusammensetzung Folgendes umfasst:
- ≥ 75,0 Gew.-% und ≤ 95,0 Gew.-%, vorzugsweise ≥ 80,0 Gew.-% und ≤ 90,0 Gew.-% des Ethylenpolymers;
- ≥ 5,0 Gew.-% und ≤ 25,0 Gew.-%, vorzugsweise ≥ 10,0 Gew.-% und ≤ 20,0 Gew.-% des zweiten Ethylen-Alpha-Olefin-Copolymers; und
- ≥ 0 Gew.-% und ≤ 1,0 Gew.-%, vorzugsweise ≥ 0 Gew.-% und ≤ 0,5 Gew.-%, vorzugsweise ≥ 0 Gew.-% und ≤ 0,15 Gew.-% Stabilisierungsadditive;
bezogen auf das Gesamtgewicht der Polyethylenzusammensetzung.

9. Polyethylenzusammensetzung nach einem der Ansprüche 1-8, wobei:
- das erste Ethylen-Alpha-Olefin-Copolymer eine Dichte von ≥ 900 kg/m³ und ≤ 910 kg/m³ aufweist, wie gemäß ASTM D792 (2008) bestimmt; und/oder
- das zweite Ethylen-Alpha-Olefin-Copolymer eine Dichte von ≥ 850 kg/m³ und ≤ 900 kg/m³ aufweist, wie gemäß ASTM D792 (2008) bestimmt.

10. Polyethylenzusammensetzung nach einem der Ansprüche 1-9, wobei die Polyethylenzusammensetzung mindestens eines des Folgenden aufweist:
- einen Elastizitätsmodul von ≥ 150,0 MPa und ≤ 250,0 MPa, vorzugsweise ≥ 160,0 MPa und ≤ 230,0 MPa, wie gemäß ASTM D638 bestimmt; und/oder
- eine Molekulargewichtsverteilung (MWD) von > 10,0 und ≤ 40,0, vorzugsweise von ≥ 15,0 und ≤ 35,0, vorzugsweise von ≥ 20,0 und ≤ 30,0, wobei (MWD) durch Dividieren des gewichtsmittleren Molekulargewichts (Mw) durch das zahlenmittlere Molekulargewicht (Mn) bestimmt wird und wobei Mw und Mn gemäß ASTM D6474-12 gemessen werden; und/oder
- eine Dichte von ≥ 905 kg/m³ und ≤ 917 kg/m³, vorzugsweise ≥ 908 kg/m³ und ≤ 915 kg/m³, wie gemäß ASTM D792 (2008) bestimmt; und/oder
- einen Speichermodul (G') von ≥ 3,0 kPa und ≤ 200,0 kPa, vorzugsweise ≥ 6,0 kPa und ≤ 190,0 kPa, wobei der Speichermodul (G') gemäß ISO 6721-10 bei einer Temperatur von 190 °C in einer Stickstoffumgebung unter Verwendung einer Parallelplattenanordnung bei einem Frequenzbereich von ≥ 0,5 und ≤ 500 Radiant/s und bei einer Schwingungsdehnung von 5 % bestimmt wird; und/oder
- einen Strukturviskositätsindex (SHI) von ≥ 25,0 und ≤ 75,0, vorzugsweise ≥ 30,0 und ≤ 50,0, wobei der Strukturviskositätsindex (SHI) als das Verhältnis η_{0,5}/η₅₀₀ definiert ist, wobei η₅₀₀ die komplexe Viskosität, gemessen bei 190 °C bei einer Frequenz von 500 Radiant/s gemäß ISO 6721-10 ist und η_{0,5} die komplexe Viskosität, gemessen bei 190 °C bei einer Frequenz von 0,5 Radiant/s gemäß ISO 6721-10 ist; und/oder
- eine Null-Scherviskosität ≥ 100,0 kPa.s und ≤ 10.00,0 kPa.s gemäß ISO 6721-10; und/oder
- einen Kaltverfestigungskoeffizienten (SHC) von ≥ 30,0 und ≤ 60,0, vorzugsweise ≥ 35,0 und ≤ 55,0, vorzugsweise ≥ 40,0 und ≤ 50,0, wobei der Kaltverfestigungskoeffizient (SHC) als das Verhältnis eta_{3,3}/eta_{0,1} definiert ist, wobei eta_{3,3} die Dehnungsviskosität, gemessen bei einer Temperatur von 150 °C bei einer Zeit von 3,3 Sekunden unter Verwendung einer Dehnungsrate von 1,0/Sekunde gemäß ISO 20965 (2005) ist, und eta_{0,1} die Dehnungsviskosität, gemessen bei einer Temperatur von 150 °C bei einer Zeit von 0,1 Sekunden unter Verwendung einer Dehnungsrate von 1,0/Sekunde gemäß ISO 20965 (2005) ist; und/oder
- eine Gardner-Schlagfestigkeit von ≥ 2,0 Joule und ≤ 5,0 Joule, wobei die Gardner-Schlagfestigkeit gemäß ASTM D 5420-10 bestimmt wird; und/oder
- Verhältnis von Mz/Mw von ≥ 4,0 und ≤ 10,0, vorzugsweise Mz/Mw von ≥ 4,2 und ≤ 8,0, wobei Mz das Z-mittlere Molekulargewicht darstellt, Mw das gewichtsmittlere Molekulargewicht darstellt, wobei Mz und Mw gemäß ASTM D6474-12 gemessen werden; und/oder
- eine Überschneidungsfrequenz von ≥ 3,0 Radiant/s und ≤ 30,0 Radiant/s, vorzugsweise ≥ 3,0 Radiant/s und ≤ 25,0 Radiant/s, wobei die Überschneidungsfrequenz die Frequenz darstellt, bei der ein Speichermodul (G') der Polyethylenzusammensetzung gleich dem Verlustmodul (G") der Polyethylenzusammensetzung ist, wenn der Speichermodul (G') und der Verlustmodul (G") gemäß ISO 6721-10 bei einer Temperatur von 190 °C in einer Stickstoffumgebung unter Verwendung einer Parallelplattenanordnung und bei einer beliebigen Frequenz von ≥ 0,5 Radiant/s und ≤ 500 Radiant/s bei einer Schwingungsdehnung von 5 % gemessen werden.

11. Prozess zum Herstellen der Polyethylenzusammensetzung nach einem der Ansprüche 1-10, umfassend:
- Trockenmischen des Ethylen-Polymers und des Ethylen-Alpha-Olefin-Copolymers, um einen Vorläufer der gemischten Zusammensetzung zu bilden; und
- Schmelzmischen, vorzugsweise Coextrudieren, des Vorläufers der gemischten Zusammensetzung, um die Polyethylenzusammensetzung zu bilden.

12. Artikel, der die Polyethylenzusammensetzung nach einem der Ansprüche 1-10 umfasst, oder Artikel, der gemäß dem Prozess von Anspruch 11 hergestellt ist, wobei der Artikel aus einem Behälter, einer Folie, einem Gesundheitsartikel, einem Verpackungsmaterial oder einem Post-Consumer-Rezyklat (PCR)-Material ausgewählt ist.

13. Artikel nach Anspruch 12, wobei der Artikel ein Behälter mit einer Volumenkapazität von ≥ 1,5 Litern, vorzugsweise mit einer Volumenkapazität von ≥ 5,0 Litern ist, wobei der Artikel vorzugsweise ein Behälter mit einer Volumenkapazität von ≥ 1,5 Litern und ≤ 10,0 Litern ist.

14. Prozess zum Herstellen des Artikels nach einem der Ansprüche 12-13, wobei der Prozess die folgenden Schritte umfasst:
- Bereitstellen der Polyethylenzusammensetzung nach einem der Ansprüche 1-10;
- Verarbeiten der Polyolefinzusammensetzung und Bilden des Artikels, wobei das Verarbeiten ein beliebiges von Extrusion, Spritzgießen, Blasformen, Schmelzmischen, Pulversintern, Rotationsschmelzen umfasst, wobei Verarbeiten vorzugsweise Blasformen der Polyethylenzusammensetzung umfasst.

15. Verwendung des Artikels nach einem der Ansprüche 12-13 oder eines nach Anspruch 14 hergestellten Artikels, der eine verbesserte Flexibilität und gleichmäßige Dicke aufweist.

## Revendications

1. Composition de polyéthylène, comprenant :
- ≥ 56,0 % en poids et ≤ 95,0 % en poids d'un polymère d'éthylène, par rapport au poids total de la composition de polyéthylène ;
- dans laquelle le polymère d'éthylène présente une masse volumique ≥ 918 kg/m³ et ≤ 930 kg/m³, telle que déterminée conformément à la norme ASTM D1505 à 23 °C ;
- une distribution de poids moléculaire (MWD) ≥ 15,0, de préférence ≥ 20,0, dans laquelle (MWD) est calculée en divisant le poids moléculaire moyen en poids (Mw) par le poids moléculaire moyen en nombre (Mn) et dans laquelle Mw et Mn sont mesurés conformément à la norme ASTM D6474-12 ; et
- ≥ 5,0 % en poids et ≤ 44,0 % en poids d'un copolymère d'éthylène alpha-oléfine, par rapport au poids total de la composition de polyéthylène, dans laquelle le copolymère d'éthylène alpha-oléfine comprend au moins i) un premier copolymère d'éthylène alpha-oléfine ; et/ou ii) un second copolymère d'éthylène alpha-oléfine ;
dans laquelle la composition de polyéthylène présente un indice de fluidité à chaud (MFR) ≥ 0,3 g/10 min et ≤ 0,95 g/10 min, de préférence ≥ 0,35 g/10 min et ≤ 0,8 g/10, de préférence ≥ 0,4 g/10 min et ≤ 0,6 g/10 min, tel que déterminé à 190 °C à une charge de 2,16 kg conformément à la norme ASTM D1238.

2. Composition de polyéthylène selon la revendication 1, dans laquelle le copolymère d'éthylène alpha-oléfine présente :
- une distribution de poids moléculaire (MWD) ≤ 3,5, dans laquelle la MWD est calculée en divisant le poids moléculaire moyen en poids (Mw) par le poids moléculaire moyen en nombre (Mn) et dans laquelle Mw et Mn sont mesurés conformément à la norme ASTMD6474-12 ; et/ou
- un indice de fluidité à chaud (MFR) ≥ 0,05 g/10 min et ≤ 5,0 g/10 min, de préférence ≥ 0,1 g/10 min et ≤ 2,0 g/10 min, tel que déterminé à 190 °C à une charge de 2,16 kg conformément à la norme ASTMD1238.

3. Composition de polyéthylène selon l'une quelconque des revendications 1-2, dans laquelle la composition de polyéthylène comprend au moins l'un des éléments suivants :
- ≥ 5,0 % en poids et ≤ 44,0 % en poids, de préférence ≥ 25,0 % en poids et ≤ 40,0 % en poids, du premier copolymère d'éthylène alpha-oléfine, par rapport au poids total de la composition de polyéthylène ; et/ou
- ≥ 5,0 % en poids et ≤ 25,0 % en poids, de préférence ≥ 10,0 % en poids et ≤ 20,0 % en poids, du second copolymère d'éthylène alpha-oléfine, par rapport au poids total de la composition de polyéthylène.

4. Composition de polyéthylène selon l'une quelconque des revendications 1-3, dans laquelle le premier copolymère d'éthylène alpha-oléfine comprend des unités dérivées de (i) l'éthylène et (ii) ≥ 2,0 % en poids et ≤ 25,0 % en poids, de préférence ≥ 10,0 % en poids et ≤ 20,0 % en poids, d'unités dérivées d'une ou plusieurs alpha-oléfines présentant 3-12 atomes de carbone, par rapport au poids total du premier copolymère d'éthylène alpha-oléfine.

5. Composition de polyéthylène selon l'une quelconque des revendications 1-4, dans laquelle le second copolymère d'éthylène alpha-oléfine comprend des unités dérivées de (i) l'éthylène et (ii) ≥ 25,0 % en poids et ≤ 45,0 % en poids, de préférence ≥ 35,0 % en poids et ≤ 40,0 % en poids, d'unités dérivées d'une ou plusieurs alpha-oléfines présentant 3-12 atomes de carbone, par rapport au poids total du second copolymère d'éthylène alpha-oléfine.

6. Composition de polyéthylène selon l'une quelconque des revendications 4-5, dans laquelle l'alpha-oléfine est choisie parmi le 1-butène, le 1-hexène, le 4-méthyl-1-pentène, le 1-octène ou des combinaisons de ceux-ci, de préférence l'alpha-oléfine est choisie parmi le 1-hexène ou le 1-octène.

7. Composition de polyéthylène selon l'une quelconque des revendications 1-6, dans laquelle la composition de polyéthylène comprend :
- ≥ 56,0 % en poids et ≤ 95,0 % en poids, de préférence ≥ 60,0 % en poids et ≤ 75,0 % en poids, du polymère d'éthylène ;
- ≥ 5,0 % en poids et ≤ 44,0 % en poids, de préférence ≥ 25,0 % en poids et ≤40,0 % en poids du premier copolymère d'éthylène alpha-oléfine ; et
- ≥ 0 % en poids et ≤ 1,0 % en poids, de préférence ≥ 0 % en poids et ≤ 0,5 % en poids, de préférence ≥ 0 % en poids et ≤ 0,15 % en poids, d'additifs de stabilisation ;
par rapport au poids total de la composition de polyéthylène.

8. Composition de polyéthylène selon l'une quelconque des revendications 1-6, dans laquelle la composition de polyéthylène comprend :
- ≥ 75,0 % en poids et ≤ 95,0 % en poids, de préférence ≥ 80,0 % en poids et ≤ 90,0 % en poids du polymère d'éthylène ;
- ≥ 5,0 % en poids et ≤ 25,0 % en poids, de préférence ≥ 10,0 % en poids et ≤ 20,0 % en poids, du second copolymère d'éthylène alpha-oléfine ; et
- ≥ 0 % en poids et ≤ 1,0 % en poids, de préférence ≥ 0 % en poids et ≤ 0,5 % en poids, de préférence ≥ 0 % en poids et ≤ 0,15 % en poids d'additifs de stabilisation ;
par rapport au poids total de la composition de polyéthylène.

9. Composition de polyéthylène selon l'une quelconque des revendications 1-8, dans laquelle :
- le premier copolymère d'éthylène alpha-oléfine présente une masse volumique ≥ 900 kg/m³ et ≤ 910 kg/m³, telle que déterminée conformément à la norme ASTM D792 (2008) ; et/ou
- le second copolymère d'éthylène alpha-oléfine présente une masse volumique ≥ 850 kg/m³ et ≤ 900 kg/m³, telle que déterminée conformément à la norme ASTM D792 (2008).

10. Composition de polyéthylène selon l'une quelconque des revendications 1-9, dans laquelle la composition de polyéthylène présente au moins l'un des éléments suivants :
- un module d'élasticité ≥ 150,0 MPa et ≤ 250,0 MPa, de préférence ≥ 160,0 MPa et ≤ 230,0 MPa tel que déterminé conformément à la norme ASTM D638 ; et/ou
- une distribution de poids moléculaire (MWD) de > 10,0 et ≤ 40,0, de préférence de ≥ 15,0 et ≤ 35,0, de préférence de ≥ 20,0 et ≤ 30,0, dans laquelle (MWD) est déterminée en divisant le poids moléculaire moyen en poids (Mw) par le poids moléculaire moyen en nombre (Mn) et dans laquelle Mw et Mn sont mesurés conformément à la norme ASTMD6474-12 ; et/ou
- une masse volumique ≥ 905 kg/m³ et ≤ 917 kg/m³, de préférence ≥ 908 kg/m³ et ≤ 915 kg/m³ telle que déterminée conformément à la norme ASTM D792 (2008) ; et/ou
- un module de stockage (G') ≥ 3,0 kPa et ≤ 200,0 kPa, de préférence ≥ 6,0 kPa et ≤ 190,0 kPa, dans laquelle le module de stockage (G') est déterminé conformément à la norme ISO 6721-10 à une température de 190 °C dans un environnement d'azote en utilisant une configuration de plaques parallèles dans une plage de fréquences ≥ 0,5 et ≤ 500 rad/s, et à une déformation d'oscillation de 5 % ; et/ou
- un indice de fluidification (SHI) ≥ 25,0 et ≤ 75,0, de préférence ≥ 30,0 et ≤ 50,0, dans laquelle l'indice de fluidification (SHI) est défini comme le rapport η_{0,5}/η₅₀₀ où η₅₀₀ est la viscosité complexe mesurée à 190°C à une fréquence de 500 rad/s conformément à la norme ISO 6721-10 et η_{0,5} est la viscosité complexe mesurée à 190 °C à une fréquence de 0,5 rad/s conformément à la norme ISO 6721-10 ; et/ou
- une viscosité de cisaillement zéro ≥ 100,0 kPa.s et ≤ 10 000,0 kPa.s conformément à la norme ISO 6721-10 ; et/ou
- un coefficient d'écrouissage (SHC) ≥ 30,0 et ≤ 60,0, de préférence ≥ 35,0 et ≤ 55,0, de préférence ≥ 40,0 et ≤ 50,0, dans laquelle le coefficient d'écrouissage (SHC) est défini comme le rapport eta_{3,3}/eta_{0,1} dans laquelle eta_{3,3} est la viscosité extensionnelle mesurée à une température de 150 °C à un instant de 3,3 secondes en utilisant une vitesse de déformation de 1,0/seconde conformément à la norme ISO 20965 (2005) et eta_{0,1} est la viscosité extensionnelle mesurée à une température de 150 °C à un instant de 0,1 seconde en utilisant une vitesse de déformation de 1,0/seconde conformément à la norme ISO 20965 (2005) ; et/ou
- une résistance à l'impact Gardner ≥ 2,0 joules et ≤ 5,0 joules, dans laquelle la résistance à l'impact Gardner est déterminée conformément à la norme ASTM D 5420-10 ; et/ou
- un rapport Mz/Mw ≥ 4,0 et ≤ 10,0, de préférence Mz/Mw ≥ 4,2 et ≤ 8,0, dans laquelle Mz représente le poids moléculaire moyen Z, Mw représente le poids moléculaire moyen en poids, dans laquelle Mz et Mw sont mesurés selon la norme ASTM D6474-12 ; et/ou
- une fréquence de croisement ≥ 3,0 rad/s et ≤ 30,0 rad/s, de préférence ≥ 3,0 rad/s et ≤ 25,0 rad/s, dans laquelle la fréquence de croisement représente la fréquence à laquelle le module de stockage (G') de la composition de polyéthylène est égal au module de perte (G") de la composition de polyéthylène, lorsque le module de stockage (G') et le module de perte (G") sont déterminés conformément à la norme ISO 6721-10 à une température de 190 °C dans un environnement d'azote en utilisant une configuration de plaques parallèles, et à toute fréquence ≥ 0,5 rad/s et ≤ 500 rad/s, à une déformation d'oscillation de 5 %.

11. Processus de préparation de la composition de polyéthylène selon l'une quelconque des revendications 1-10, comprenant :
- le mélange à sec du polymère d'éthylène et du copolymère d'éthylène alpha-oléfine pour former un précurseur de composition mélangée ; et
- le mélange à l'état fondu, de préférence la coextrusion, du précurseur de composition mélangée pour former la composition de polyéthylène.

12. Article comprenant la composition de polyéthylène selon l'une quelconque des revendications 1-10 ou un article préparé selon le processus de la revendication 11, dans lequel l'article est choisi parmi un récipient, un film, un article de santé, un matériau d'emballage ou un matériau recyclé post-consommation (PCR).

13. Article selon la revendication 12, dans lequel l'article est un récipient présentant une capacité volumique ≥ 1,5 litre, de préférence présentant une capacité volumique ≥ 5,0 litres, de préférence l'article est un récipient présentant une capacité volumique ≥ 1,5 litre et ≤ 10,0 litres.

14. Processus de préparation de l'article selon l'une quelconque des revendications 12-13, dans lequel le processus comprend les étapes consistant à :
- fournir la composition de polyéthylène selon l'une quelconque des revendications 1-10 ;
- traiter la composition de polyoléfine et former l'article, dans lequel le traitement comprend l'un quelconque parmi l'extrusion, le moulage par injection, le moulage par soufflage, le mélange à l'état fondu, le moulage par embouage, le rotomoulage, de préférence le traitement comprend le moulage par soufflage de la composition de polyéthylène.

15. Utilisation de l'article selon l'une quelconque des revendications 12-13 ou d'un article préparé selon la revendication 14, présentant une flexibilité améliorée et une épaisseur uniforme.
